# EUROPEAN PATENT SPECIFICATION

(11) **EP 1 544 016 B1**
(45) Date of publication and mention of the grant of the patent: **10.02.2010**
(21) Application number: 04029884.6
(22) Date of filing: 16.12.2004
(51) Int. Cl.: B60J 10/00, B60J 10/08

(54) **Automotive weather strip**
KFZ-Dichtungsprofil
Joint d'étanchéité pour véhicule

(30) Priority: 17.12.2003 JP 2003419095
(43) Date of publication of application: 22.06.2005
(73) Proprietor: TOYODA GOSEI CO., LTD., Nishi-Kasugai-gun, Aichi-ken, 452-8564 (JP)
(72) Inventor: Aoki, Shigenori c/o TOYODA GOSEI CO., LTD., Haruhi-cho, Nishikasugai-gun, Aichi-ken 452-8564 (JP); Suzuki, Satoshi c/o TOYODA GOSEI CO., LTD., Haruhi-cho, Nishikasugai-gun, Aichi-ken 452-8564 (JP); Morita, Takafumi c/o TOYODA GOSEI CO., LTD., Haruhi-cho, Nishikasugai-gun, Aichi-ken 452-8564 (JP); Yoshioka, Shinichi c/o TOYODA GOSEI CO., LTD., Haruhi-cho, Nishikasugai-gun, Aichi-ken 452-8564 (JP)
(74) Representative: Kramer - Barske - Schmidtchen

(56) References cited:
- EP-A- 0 719 668
- DE-A1- 3 740 913
- US-A- 5 054 241
- US-A- 5 207 029
- US-A- 5 319 883
- US-A- 5 649 405
- US-A- 5 950 366
- US-A1- 2002 112 405

## Description

### BACKGROUND OF THE INVENTION

### 1. Field of the Invention

The present invention relates to a weather strip applied to the joints of an automobile door or a roof side, for example.

### 2. Related Art

Weather strips are installed around the outer peripheral edges of automobile doors and the like. Heretofore, a weather strip having a hollow seal portion (main seal portion) and a weather strip having a seal lip (sub-seal portion) may be applied to respective parts corresponding to the upper side of a door. In this case, these two pieces of weather strips have to be produced separately from each other and installed independently of each other.

On the other hand, the art of integrating a main seal member having the main seal portion with a sub-seal member having the sub-seal portion by means of a coupling portion has been proposed (see Japanese Patent Publication No. JP-A-2002-307952, for example). With this arrangement, the number of man-hours necessary for the manufacture of weather strips becomes reducible while workability is the made improvable thereby at the time these members are installed.

Now, in the aforesaid prior art, not only the main seal member but the sub-seal member normally has a fitting base portion in the form of a substantially flat plate fitted to a retainer. In this case, in view of planning to improve the workability further at the time of installation, it is reasoned that the fitting base portion of the sub-seal member is formed of solid material, for example, with the one side portion securely latched to the retainer while the other side portion (main seal member side) is not securely latched thereto, so that latching the one side portion to the retainer serves as latching the other side portion thereto; that is, the other side portion is dependent on latching of the fitting base portion of the main seal portion made of foamed material to the retainer. Thus, the installation work can be simplified further.

When the weather strip is thus configured, however, the difference in foaming rate between the main seal member and the sub-seal member and the difference in expansion rate therebetween may cause a warp to be produced in the weather strip in case both the members are integrally molded. More specifically, the fitting base portion of the sub-seal portion is hard to expand to the extent that the fitting base portion thereof is formed of solid material when the weather strip is extrusion-molded and the main seal member is rather easy to expand. Consequently, the weather strip may warp immediately after the extrusion (at the time of vulcanization and the like) , so that the installation workability may be worsened instead.

US 5,207,029, which forms the preamble of claim 1, discloses a weather strip having a first seal which is a hollow seal portion and a second seal formed by a lip seal portion. A connecting portion is provided between the base portions of these two seal portions. The base portions are made of hard material, the hollow seal portion is made in its entirety of sponge rubber and the second seal has two layers, namely one made of sponge rubber and one of solid rubber.

### SUMMARY OF THE INVENTION

An object of the invention made in view of the circumstances above is to provide a weather strip feasible for reducing'the number of man-hours, restraining the generation of a warp and improving installation workability.

This object is solved by a weather strip comprising the features of claim 1. Preferred embodiments are defined by the dependent claims.

Each of the means fit for solving the foregoing problems will now be described in due order. Further, operation/working-effect characteristic of the corresponding means will be described in addition as the need arises.

Means 1: The weather strip comprises a first seal member having a first fitting base portion and a main seal portion formed integrally with the first fitting base portion, a second seal member having a second fitting base portion and a sub-seal portion formed integrally with the second fitting base portion, a coupling portion for coupling the first seal member and the second seal member, wherein the greater part or the whole part of the second fitting base portion is formed of solid material or fine foaming material; and the main seal portion and the sub-seal portion are formed of foaming material, and is characterized in that at least part of the first fitting base portion is formed of the solid material or the fine foaming material.

According to the means 1, the first seal member and the second seal member are coupled via the coupling portion, so that the number of man-hours necessary for the manufacture of them is reducible in comparison with a case where they are separately molded. At the time of installation, moreover, it is less burdensome to install the first seal member and the second seal member in comparison with a case where they are installed independently of each other, whereby an improvement in workability is attempted. The greater part or the whole part of the second fitting base portion is formed of the solid material or the fine foaming material according to the means 1. Consequently, the installed condition as a whole can be maintained with stability by relatively securely installing the first seal member by relatively securely latching one side portion of the second fitting base portion even without securely latching the other side portion on the first seal member side. Therefore, the installation work is greatly simplified by adopting an installation mode like this.

According to the means 1, moreover, though the greater part or the whole part of the second fitting base portion is formed of the solid material or the fine foaming material, at least part of the first fitting base portion is also formed of the solid material or the fine foaming material. Hence, unlike the prior art in which the difference in not only foaming rate but expansion rate may cause a warp to be produced, the presence of the solid material or the fine foaming material in the first seal member and the second member both causes the difference in expansion rate to hardly occur. Therefore, it is possible to prevent nonconformity such as a deterioration in installation workability resulting from the generation of the warp and consequently the installation workability can greatly be improved.

Further, the foaming material, the solid material and the fine foaming material referred to in the means herein will be described. The foaming material is a relatively soft sponge material; more specifically, it is preferable that the foaming quantity (the volume of foam accounting for a percentage of the total volume) is greater than 25% and that the hardness is less than 65 degrees in the JIS-A type. EPDM (ethylene-diene-propylene copolymer), TPO (olefin thermoplastic elastomer) and so forth, for example, are cited as other raw materials. In the meantime, the sold material and the fine foaming material are relatively hard and have prescribed rigidity to the extent that their own shapes are maintained. More specifically, it is preferable that the solid material and the fine foaming material have a hardness of not less than 65 degrees and not greater than 85 degrees in the JIS-A type and in the case of the fine foaming material, what has a foaming quantity of not greater than 25% is preferable. As raw materials, EPDM, TPO, PP (polypropylene) and so on are enumerated.

Means 2: The weather strip comprises a first seal member having a first fitting base portion in the form of a substantially flat plate and a hollow seal portion formed integrally with the first fitting base portion, a second seal member having a second fitting base portion in the form of a substantially flat plate and a seal lip formed integrally with the second fitting base portion, a coupling portion for coupling the first seal member and the second seal member, wherein the greater part or the whole part of the second fitting base portion is formed of solid material or fine foaming material; and the hollow seal portion and the seal lip are formed of foaming material, and is characterized in that at least part of the first fitting base portion is formed of the solid material or the fine foaming material.

According to the means 2, though operation/working-effect is basically similar to what has been described as in the case of the means 1, the sealing functions performed by the hollow seal portion and the seal lip are demonstrated with respect to sealing. As both the first fitting base portions are in the form of a substantially flat plate, the merit is that they are easily inserted (fitted) into the depression (e.g., a hook-shaped mating portion) of the fitting means such as retainers.

Means 3: The weather strip as described in the means 1 and 2, wherein a part not directly related to installation or sealing out of the first fitting base portion is formed of the solid material or the fine foaming material.

According to the means 3, a part not directly related to installation or sealing out of the first fitting base portion is formed of the solid material or the fine foaming material and any other part is formed of the foaming material and relatively easily deformed; when the part is fitted (fitted into the fitting member such as a retainer or fixed to a jig such as a clip, for example) ,an improvement inworkability is offeredin security, which results in never impeding sealability. In this case, the 'part not directly related to installation' means mainly a part not in direct contact with the fitting member or the fitting jig and the 'part not directly related to sealing' means mainly a part without contact against an opposing member as an object for sealing.

Means 4: The weather strip as described above, wherein the rate of the cross section of the portion formed of the solid material or the fine foaming material out of the second fitting base portion to the cross section of the portion formed of the solid material or the fine foaming material out of the first fitting base portion is not less than one third and not greater than one.

According to the means 4, it is ensured that the warp is hardly produced. In case where the rate of the cross section is less than one third, on the contrary, the effect of preventing the generation of the warp may be demonstrated. In case where the rate of the cross section is greater than one, the installation of the first fitting base portion may be impeded and the first fitting base portion will have to become huge in size. However, the 'rate of the cross section' may be set 'not less than one half and not greater than one' or 'not less than two thirds and not greater than one.'

Means 5: the weather strip as described above, wherein at least both sides of the first fitting base portion are latched to fitting means so as to be fixedly installed; and at least the one side thereof is formed of the foamingmaterial.

According to the means 5, with both sides of the first fitting base portion being latched to the fitting means such as a retainer, the first fitting base portion is fixed; in this case, since at least one side portion thereof is formed of the foaming material, it is readily be latched thereto without resistance on latching the other side portion thereto first. Thus, a further improvement in the installation workability can be attempted.

Means 6: the weather strip as described above, wherein a surface region visually confirmable from the outside in an installed condition is formed of the foaming material.

In the weather strip according to each of the means above, wherein the foaming material and the solid material or the fine foaming material are intermingled, there develops a problem arising from deteriorating external appearance because of difference in external appearance mode. In view of this, as the surface region visually confirmable from the outside in the installed condition is totally formed of the foaming material according to the means 6, a difference in the external appearance mode hardly occurs, thus resulting in preventing the deterioration of the quality of the external appearance.

Means 7: the weather strip as described above, wherein the coupling portion is formed of the foaming material.

A prescribed gap is generally set between the first seal member and the second seal member and as the coupling portion for coupling both of them is formed of the foaming material according to the means 7, so that the coupling portion is excellent in follow-up characteristic as it is relatively easy to elongate. Assuming that a number of installation errors exist in each of the means for installing the first fitting base portion and the second fitting base portion, such errors can be absorbed. Consequently, the installation workability is prevented from being deteriorated and even after the installation, the stabilization of the installed condition can be attempted.

Means 8: the weather strip as described above wherein the first fitting base portion is latched by a clip and the part unaffected by incorporating the clip is formed of the solid material or the fine foaming material.

According to the means 8, the first fitting base portion is latched by the clip. Of the first fitting base portion, the part unaffected by incorporating the clip is formed of the solid material or the fine foaming material, whereby the operation/working-effect become effective. Further, the clip is relatively easily fitted as the part affected by incorporating the clip, or the periphery of the part where the insertion of the clip is made is formed of the foaming material. Moreover, the presence of the solid material or the fine foaming material results in increasing rigidity, whereby sealing between the weather strip and an opposing part (e.g., a door frame) is further stabilized.

### BRIEF DESCRIPTION OF THE DRAWINGS

Fig. 1 is a sectional view of the principal part of a weather strip taken on line I-I of Fig. 2 according an embodiment of the invention.
Fig. 2 is a schematic elevational view of the schematic configuration of a door weather strip.
Fig. 3 is a sectional view of a weather strip according to another embodiment of the invention.
Fig. 4 is a sectional view of a weather strip according to still another embodiment of the invention.

### DETAILED DESCRIPTION OF THE PREFERRED EMBODIMENTS

An embodiment of the invention will now be described by reference to the drawings.

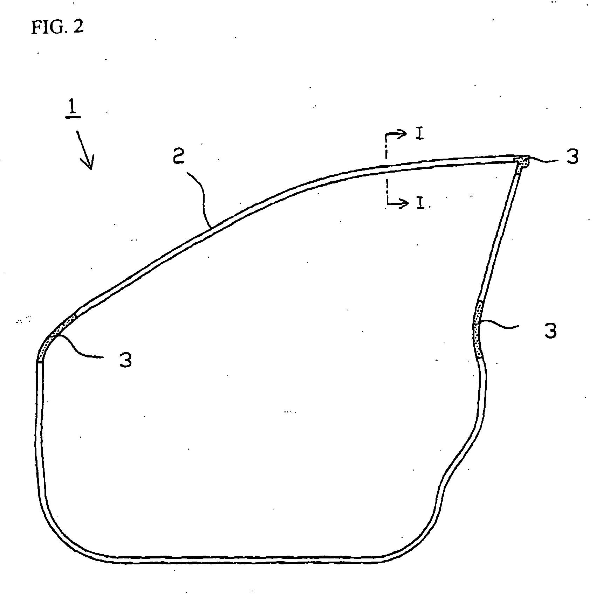

Automobiles are provided with open-and-close front doors and a weather strip 1 is installed along the outer periphery of such a front door as shown in Fig. 2. The greater part of the weather strip 1 along the longer direction is formed by an extrusion molding portion 2. Moreover, corner portions (with point patterns in Fig. 2) are formed with die-molded sections 3.

As a portion corresponding to the roof side portion (upper side portion of Fig. 2) out of the extrusion-molded portion 2 has a distinctive feature according to the embodiment of the invention, the construction of the portion in question will be described as follows.

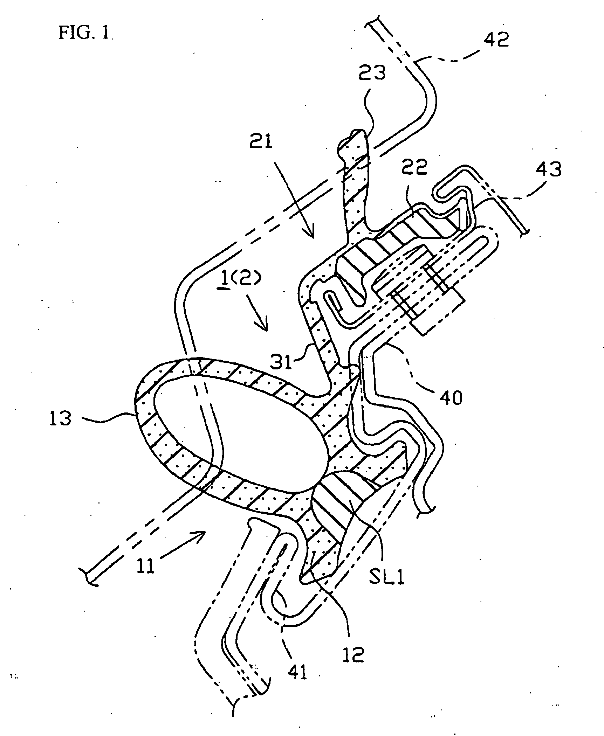

As shown in Fig. 1, the extrusion-molded portion 2 in the upper side portion has a main seal member 11 as a first seal member, a sub-seal member 21 as a second seal member and a coupling portion 31 for coupling both the seal members 11 and 21.

The main seal member 11 has a substantially flat platelike first fitting base portion 12 fitted to the first retainer 41 of a door frame 40, and a hollow seal portion 13 formed integrally with the first fitting base portion 12 and protruded in an expanded condition toward the open peripheral edge of a body 42. The hollow seal portion 13 is formed of EPDM (ethylene-diene-propylene copolymer) sponge rubber.

The sub-seal member 21 has a substantially flat platelike second fitting base portion 22 fitted to a second retainer 43 positioned on the outer body side of the first retainer 41, and a seal lip 23 formed integrally with the second fitting base portion 22 and projected toward the open peripheral edge of the body 42. Like the seal portion 13 above, the seal lip 23 is formed of EPDM (ethylene-diene-propylene copolymer) sponge rubber. More specifically, the seal lip 23, the coupling portion 31 and the hollow seal portion 13 are formed of EPDM sponge rubber consecutively by monolithic molding.

With the weather strip 1 thus configured, the hollow seal portion 13 and the seal lip 23 come into contact with the open peripheral edge of the body 42 and are deformed when the front door is shut whereby to seal up the gap between the body 42 and the front door (door frame 40).

In view of planning to improve the workability further at the time of installation, the greater part of the substantially flat platelike second fitting base portion 22 of the sub-seal member 21 is formed of EPDM solid rubber as a solid material according to the embodiment of the invention. Moreover, the one-side (on the outer body side) is made to be inserted into a mating depression in the latching part on the outer body side (in the right upper portion of Fig. 1) of the second retainer 43 and securely latched inside, whereas the side portion on the side of the main seal member 11 is made not to be so securely latched. In other words, since the sub-seal member 21 and the main seal member 11 are monolithically molded via the coupling portion 31 with respect to the other side portion of the second fitting base portion 22 according to the embodiment of the invention, the latching of the door weather strip 1 as a whole is maintained by securely fixing the first fitting base portion 12 of the main seal member 11 to the door frame 40 of the front door. Thus, an attempt to greatly simplify installation work is made.

With respect to a region visually confirmable from the outside (mainly the upper portion of Fig. 1) with the weather strip 1 in an installed condition, the greater part is formed of the EPDM sponge rubber. In other words, even in the second fitting base portion 22 mostly formed of the solid rubber, its upper surface layer portion is formed of the EPDM sponge rubber as in the seal lip 23. Thus, the region visually confirmable from the outside is totally formed of the EPDM sponge rubber, so that it is attempted to prevent the quality of the external appearance from being deteriorated because of a difference in material.

Further, though the greater part of the second fitting base portion 22 is formed of the EPDM solid rubber, the central part of the first fitting base portion 12 (the portion shown by SL1 in Fig. 1) is formed of the EPDM solid rubber as well. The central part is a part that is not directly related to sealing and both its sides, that is, the portion directed related to the latching with respect to the first retainer 41, are formed of the EPDM sponge rubber. The ratio of the cross section of the portion formed of the solid material out of the first fitting base portion 12 to the cross section of the portion formed of the solid material out of the second fitting base portion 22 is set to not less than one third and not greater than one.

As described above in detail, the main seal member 11 and the sub-seal member 21 are integrated via the coupling portion 31 according to the embodiment of the invention, so that the number of man-hours necessary for the manufacture of them is reducible in comparison with a case where they are separately molded. At the time of installation, moreover, it is less burdensome to install the main seal member 11 and the sub-seal member 21 in comparison with a case where they are installed independently of each other, whereby an improvement in workability is attempted.

The greater part of the second fitting base portion 22 is formed of the EPDM solid rubber. Consequently, by relatively securely inserting the side portion on the outer body side of the second fitting base portion 22 into the depression of the second retainer 43 without securely latching the other side portion on the side of the main seal member 11, the main seal member 11 is relatively securely fitted to the first retainer 41, so that the installed condition of the weather strip as a whole can be maintained with stability. Therefore, the installation work is greatly simplified by adopting an installation mode like this.

Although the greater part of the second fitting base portion 22 is formed of the EPDM solid rubber, the central part of the first fitting base portion 12 is also formed of the EPDM solid rubber according to the embodiment of the invention. Hence, unlike the prior art in which the difference in not only foaming rate but expansion rate may cause a warp to be produced, the presence of the solid material in the main seal member 11 and the sub-seal member 21 both causes the difference in expansion rate to hardly occur. Therefore, it is possible to prevent nonconformity such as a deterioration in installation workability resulting from the generation of the warp and consequently the installation workability can greatly be improved.

The EPDM solid rubber is especially provided in the central part not directly related to installation as well as sealing out of the first fitting base portion 12 and any portion other than the central part is formed of the EPDM sponge rubber. Therefore, both sides of the first fitting base portion 12 are relatively easily subjected to deformation and can be fitted to the first retainer 41 without any impediment in particular.

In the installed condition of the weather strip 1 according to the embodiment of the invention, the region visually confirmable from the outside is totally formed of the EPDM sponge rubber, whereby nonconformity resulting from the lowering of the quality of the external appearance caused by employing different material is made preventable.

While the prescribed gap is simultaneously provided between the main seal member 11 and the sub-seal member 21, the coupling portion 31 for coupling them 11 and 21 is formed of the EPDM sponge rubber according to the embodiment of the invention, so that the coupling portion 31 is excellent in follow-up characteristic as it is relatively easy to elongate. Assuming that a number of installation errors exist in regard to the first retainer 41 and the second retainer 43, installation can be completed with a sufficient time margin on absorbing such errors. Consequently, it is ensured that the installation workability is prevented from being deteriorated and even after the installation, the stabilization of the installed condition can be attempted.

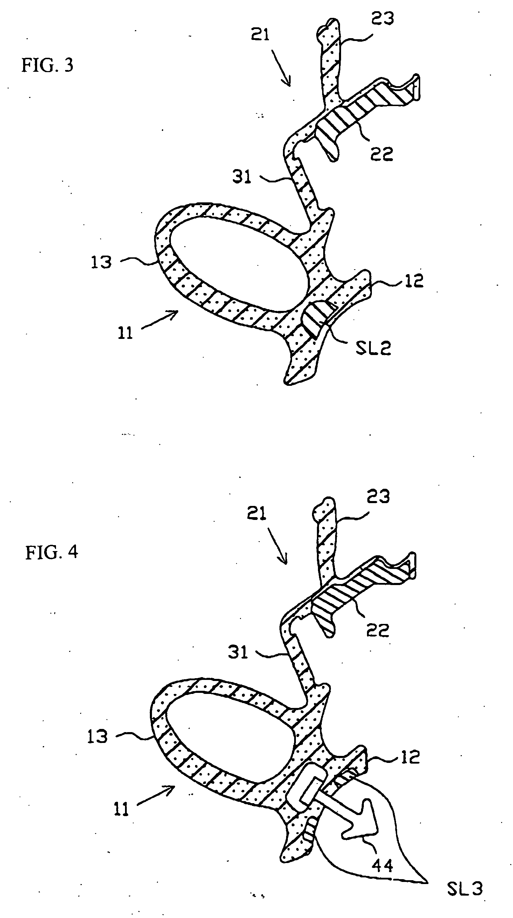

The invention is not limited to what has been described in the embodiment thereof but may be implemented as follows:
(a) Although it has been arranged according to the embodiment of the invention that the EPDM solid rubber (SL1) of the first fitting base portion 12 is exposed to the first retainer 41, EPDM solid rubber (SL2 in Fig. 3) may be covered with the EPDM sponge rubber as shown in Fig. 3, which is also applicable to the second fitting base portion 22 (though not shown). Needless to say, the whole periphery of the weather strip 1 may also be covered with the EPDM sponge rubber.
(b) Although the first fitting base portion 12 is installed by fitting the first fitting base portion 12 into the first retainer 41 according to the embodiment of the invention, the first fitting base portion 12 may be fixed by a clip 44 as shown in Fig. 4. In this case, EPDM solid rubber (SL3) is preferably provided in a part not in contact with the clip 44, that is, in a part not directly related to installation (i.e., without affecting installation) as shown in Fig. 4. Due to the easy-to-fit clip 44 as well as two pieces of solid rubber consecutively existing on either side of the clip 44, rigidity in the longer direction is stabilized and sealing between the weather strip and the door frame is ensured by using the clip 44.
(c) The door weather strip 1 fitted to the front door is embodied in the embodiment of the invention, which may also be applied to a door weather strip for use in a rear door. Further, a roof-side weather strip on the body side maybe embodied in the embodiment of the invention. Moreover, the invention may be applied to a weather strip for sealing up any other door (e.g., a slide door or a back door).
(d) Although the EPDM sponge material is employed as a foaming material according to the embodiment of the invention, any other foaming material may be employed as long as the material quality is relatively soft. More specifically, it is preferable that the foaming quantity (the volume of foam accounting for a percentage of the total volume) is greater than 25% and that the hardness is less than 65 degrees in the JIS-A type. TPO and so forth, for example, are cited as other raw materials.

In the meantime, though the EPDM solidmaterial has been employed as a solid material, any other solid material or fine foaming material may be employed; more specifically, what has a hardness of not less than 65 degrees and not greater than 85 degrees in the JIS-A type is preferable and in the case of the fine foaming material, what has a foaming quantity of not greater than 25% is preferable. As raw material, TPO, PP and so on are enumerated.

## Claims

1. A weather strip comprising:
a first seal member (11) having a first fitting base portion (12) and a main seal portion (13) formed integrally with the first fitting base portion (12), the first fitting base portion (12) being provided in a form of a substantially flat plate, the main seal portion (13) being constituted by a hollow seal portion formed integrally with the first fitting base portion, and at least both sides of the first fitting base portion being latched to a fitting member (41) so as to be fixedly installed;
a second seal member (21) having a second fitting base portion (22) and a sub-seal portion (23) formed of foaming material integrally with the second fitting base portion, the second fitting base portion (22) being provided in the form of a substantially flat plate and the sub-seal portion (23) is constituted by a seal lip formed integrally with the second fitting base portion, and
a coupling portion (31) for coupling the first seal member (11) and the second seal member (21),
**characterized in that** most of or all of the second fitting base portion (22) is formed of solid material or fine foaming material, the main seal portion and the sub-seal portion (23) are formed of foaming material, a part of the first fitting base portion (12) which is not in direct contact with the fitting member when installed and not in contact against an opposing member upon sealing is formed of the solid material or the fine foaming material, and wherein a ratio of a cross section of the portion formed of the solid material or the fine foaming material out of the second fitting base portion (22) to a cross section of the portion formed of the solid material or the fine foaming material out of the first fitting base portion (12) is not less than one third and not larger than one; and
at least one of the sides of the first fitting base portion (12) is formed of the foaming material.

2. A weather strip according to claim 1, wherein an upper surface of the first (12) and second (22) fitting base portion visually confirmable from the outside in an installed condition is formed of the foaming material.

3. A weather strip according to one of claims 1 or 2, wherein the coupling portion (31) is formed of the foaming material.

4. A weather strip according to one of claims 1 to 3, wherein the first fitting base portion (12) is latched by a clip (44) and a part not in contact with the clip upon installation is formed of the solid material or the fine foaming material.

## Patentansprüche

1. Dichtungsstreifen mit
einem ersten Dichtungselement (11) mit einem ersten Basisanschlussbereich (12) und einem Haüptdichtungsbereich (13), der integral mit dem ersten Basisanschlussbereich (12) ausgebildet ist, der in Form einer im Wesentlichen flachen Platte bereitgestellt ist, wobei der Hauptdichtungsbereich (13) durch einen Hohldichtungsbereich gebildet ist, der integral mit dem ersten Basisanschlussbereich ausgebildet ist, und wobei zumindest beide Seiten des ersten Basisanschlussbereichs so mit einem Anschlusselement (41) verriegelt sind, dass sie fest angebracht sind;
einem zweiten Dichtungselement (21), das einen zweiten Basisanschlussbereich (22) und einen Hilfsdichtungsbereich (23) aufweist, der aus Schaummaterial integral mit dem zweiten Basisanschlussbereich ausgebildet ist, wobei der zweite Basisanschlussbereich (22) in der Form einer im Wesentlichen flachen Platte bereitgestellt ist und der Hilfsdichtungsbereich (23) durch eine Dichtungslippe gebildet ist, die integral mit dem zweiten Basisanschlussbereich ausgebildet ist, und
einem Verbindungsbereich (31) zum Verbinden des ersten Dichtungselements (11) und des zweiten Dichtungselements (21),
**dadurch gekennzeichnet, dass** ein Großteil des oder der gesamte zweite Basisanschlussbereich (22) aus massivem Material oder feinem Schaummaterial ausgebildet ist, der Hauptdichtungsbereich und der Hilfsdichtungsbereich (23) aus Schaummaterial ausgebildet sind, ein Teil des ersten Basisanschlussbereichs (12), der, nachdem er installiert ist, nicht in direktem Kontakt mit dem Anschlusselement ist und beim Abdichten nicht in Kontakt mit einem gegenüberliegenden Element ist, aus dem massiven Material oder dem feinen Schaummaterial ausgebildet ist, und wobei ein Verhältnis aus einem Querschnitt des Bereichs aus dem massiven Material oder dem feinen Schaummaterial des zweiten Basisanschlussbereichs (22) zu einem Querschnitt des Bereichs aus dem massivem Material oder dem feinen Schaummaterial des ersten Basisanschlussbereichs (12) nicht weniger als ein Drittel und nicht größer als Eins ist, und
zumindest eine der Seiten des ersten Basisanschlussbereichs (12) aus dem Schaummaterial ausgebildet ist.

2. Dichtungsstreifen nach Anspruch 1, bei dem eine Oberfläche des ersten (12) und zweiten (22) Basisanschlussbereichs, die in einem montierten Zustand von außen sichtbar ist, aus dem Schaummaterial ausgebildet ist.

3. Dichtungsstreifen nach einem der Ansprüche 1 oder 2, bei dem der Verbindungsbereich (31) aus dem Schaummaterial ausgebildet ist.

4. Dichtungsstreifen nach einem der Ansprüche 1 bis 3, bei dem der erste Basisanschlussbereich (12) durch eine Klammer (44) verriegelt ist und ein Teil, der nach dem Montieren nicht in Kontakt mit der Klammer ist, aus dem massiven Material oder dem feinen Schaummaterial ausgebildet ist.

## Revendications

1. Joint d'étanchéité comprenant :
une première garniture d'étanchéité (11) présentant une première partie de base d'encastrement (12) et une partie d'étanchéité principale (13) constituée intégralement de la première partie de base d'encastrement (12), la première partie de base d'encastrement (12) étant prévue sous la forme d'une plaque essentiellement plane, la partie d'étanchéité principale (13) étant constituée d'une partie d'étanchéité creuse formée intégralement de la première partie de base d'encastrement, et au moins les deux côtés de la première partie de base d'encastrement étant fixés à une garniture d'étanchéité (41) de manière à être installée fixement ;
une deuxième garniture d'étanchéité (21) présentant une deuxième partie de base d'encastrement (22) et une partie d'étanchéité inférieure (23) formée d'un produit moussant intégralement avec une plaque essentiellement plane et la partie d'étanchéité inférieure (23) est constituée d'une lèvre d'étanchéité formée intégralement avec la deuxième partie de base d'encastrement (21), et
une partie d'accouplement (31) pour l'accouplement de la première garniture d'étanchéité (11) et de la deuxième garniture d'étanchéité (21),
**caractérisé en ce que** la plupart ou la totalité de la deuxième partie de base d'encastrement (22) est constituée par une matière solide ou un produit moussant fin, la partie d'étanchéité principale et la partie d'étanchéité inférieure (23) sont constituées d'un produit moussant, une partie de la première partie de base d'encastrement (12) qui n'est pas en contact direct avec l'élément d'encastrement lorsqu'elle est installée et n'est pas en contact avec un élément opposé lors de l'étanchéité étant constituée de la matière solide ou du produit moussant fin, et dans lequel un rapport de la section transversale de la partie constituée par la matière solide ou le produit moussant fin à partir de la deuxième partie de base d'encastrement (22) par rapport à une section transversale de la partie constituée par la matière solide ou le produit de moussage fin à partir de la première partie de base d'encastrement (12) est au minimum égal à un tiers et est au maximum égal à un ; et
au moins un des côtés de la première partie de base d'encastrement (12) est constitué par le produit moussant.

2. Joint d'étanchéité suivant la revendication 1, dans lequel une surface supérieure de la première (12) et de la deuxième (22) parties de base d'encastrement pouvant être visuellement confirmée depuis l'extérieur lorsqu'elle est installée est constituée du produit moussant.

3. Joint d'étanchéité suivant l'une quelconque des revendications 1 ou 2, dans laquelle la partie de couplage (31) est constituée par le produit moussant.

4. Joint d'étanchéité suivant l'une quelconque des revendications 1 à 3, dans lequel la première partie de base d'encastrement (12) est fixée par un clip (44) et une partie n'étant pas en contact avec le clip lors de l'installation est constituée par la matière solide ou par le produit moussant fin.
